# EUROPEAN PATENT SPECIFICATION

(11) **EP 2 233 386 B1**
(45) Date of publication and mention of the grant of the patent: **09.04.2014**
(21) Application number: 10380023.1
(22) Date of filing: 19.02.2010
(51) Int. Cl.: B62D 29/00

(54) **Hybrid metal-plastic component applicable to an automotive vehicle, and process for manufacturing same**
Auf ein Automobilfahrzeug anwendbare hybride Metall-Kunststoff-Komponente und Herstellungsverfahren dafür
Composant hybride métal-plastique applicable à un véhicule automobile et procédé de fabrication correspondant

(30) Priority: 25.03.2009 ES 200900806
(43) Date of publication of application: 29.09.2010
(73) Proprietor: Barcelona Technical Center, SL, 08760 Martorell - Barcelona (ES)
(72) Inventor: Ruiz Rincón, Rafael, 08760 Martorell (ES)
(74) Representative: Gislon, Gabriele

(56) References cited:
- EP-A1- 1 095 844
- EP-A2- 1 084 816
- EP-A2- 1 103 433
- EP-A2- 1 163 992
- WO-A1-2007/140113
- FR-A1- 2 876 340

## Description

### Technical Field

The present invention relates to a hybrid metal-plastic component applicable to a structural element, optionally with functional capacity, of an automotive vehicle. The hybrid metal-plastic component of the present invention is also applicable in other fields, such as the aeronautical industry and the manufacture of machinery, among others. The hybrid component comprises at least two metal base bodies in contact and an overmolded plastic reinforcement body which carries out the attachment of the metal base bodies. The present invention also relates to a process for manufacturing such hybrid metal-plastic component.

### Background of the Invention

Patent US-A-5940949 describes an arrangement for attaching two metal sheets by means of plastic rivets in the cavity of a modified injection molding tool by means of a combination of a pressing operation and a conventional injection molding process. The mold is modified to include a die at each attachment point, such that a surface of the die, after a pressing operation to deform the metal sheets around respective aligned holes, acts as part of a surface of the cavity of the mold during the injection operation. The two metal sheets are attached by the plastic material passed through the aligned holes of the two metal sheets. A drawback of this device is that the combined pressing and injection molding operation must be consecutively repeated for each attachment point or the mold must include a pressing device associated to each attachment point, with a considerable economic cost. In addition, the surface of the plastic material in contact with the two metal sheets is reduced to the inner surfaces of the aligned holes and to small areas around them, therefore the attachment points of the metal sheets made by the plastic material may be weak.

Patent EP-A-1724185 discloses a structural assembly for an automotive vehicle which comprises two base bodies made of deep-drawn sheet metal and an overmolded plastic reinforcement body. One of the metal base bodies has the shape of a channel closed by the other one. The metal sheets of the two metal base bodies have regions in contact with respective aligned holes, and the plastic material of the plastic reinforcement body is passed through said aligned holes and spread over surfaces of the metal sheets around the holes. This solution allows making all the attachment points in a single overmolding operation by placing the two base bodies in position inside a mold, closing the mold and then performing the overmolding operation. However, it has the same drawback of the relative weakness of the attachment points made by plastic material passed through the aligned holes of the metal sheets. Furthermore, there is no element which contributes to maintaining the two metal base bodies in a correct relative position before and during the placement thereof in the mold.

International patent application WO 02/068257 describes a structural element for an automotive vehicle made up of a single metal base body made of deep-drawn sheet metal and an overmolded plastic reinforcement body. To carry out the attachment between the metal body and the overmolded plastic material, projecting securing elements, which are embedded in the overmolded plastic material, are formed or fixed in the metal sheet of the metal body. International patent application WO 02/068257 neither describes nor suggests the possibility of attaching two metal based bodies by means of a portion of the overmolded plastic reinforcement body, embedding a projecting metal securing element fixed in one of the metal base bodies and passed through a hole formed in the other one.

Document EP-A-1163992, which is considered the closest prior art, discloses a plastic-metal composite member and a method for its manufacturing. The composite member comprises two metallic molded parts made of steel, nickel, chromium, copper, zinc, titanium, aluminium or magnesium, or of alloys of the above-mentioned metals, connected by a thermoplastic plastic which is injected onto the components and forms a positive connection with them. At the connecting point, a projecting portion integral of one of the metallic molded parts is inserted in a hole formed in the other metallic molded part with no direct contact between the metal parts, so that the plastic forms an electrically insulating layer between them.

A drawback with the composite member of cited document EP-A-1163992 is that the plastic insulating layer provides a weaker connection at the connecting point, especially against stresses normal to the metal parts at the connecting point, in comparison with connections where there is no need for an electrical insulation and where the metallic components directly contact to each other at the connecting point. Another drawback concerning the manufacturing method is that it provides little flexibility, due to the fact that any little modification in the geometry or position of the projecting portions, for example for adjusting tolerances, involves modifying the molds of metal parts with high economic costs, in comparison with connections where projecting elements are fixed, for example by welding, to the metallic parts.

Document EP-A-1084816 discloses a composite structural component having a plastic body with ribs which is connected to a metal reinforcing member after being manufactured. In one embodiment, the connection between the reinforcement body and the plastic body comprises the use of self-cutting fastening elements such as self-tapping screws or thread-forming screws installed through bores provided in the base of the reinforcing element, either from the inside outward or else in the reverse way, and engaged to anchoring attachments molded-on at the base of the plastic body. However, a screw-threaded element such as a self-tapping screw or a thread-forming screw initially separated from the two bodies to be joined would be very difficult to keep in position inside a mold in the case of using the screw-threaded elements to perform the attachment of the two parts when the plastic body is overmolded onto the metal body. In any case, the cited document EP-A-1084816 does not disclose how to attach two metal bodies using a plastic body overmolded thereon and embedding a screw-threaded element attached to one of them.

### Disclosure of the Invention

The present invention contributes to solving the previous and other drawbacks by providing a hybrid metal-plastic component applicable to an automotive vehicle, comprising first and second metal base bodies having respective portions in contact with at least one attachment point formed by respective aligned attachment configurations, and an overmolded plastic reinforcement body carrying out the attachment of the two metal base bodies at said attachment point. The portion of the first metal base body in contact with the second metal base body has a securing hole located at said attachment point, and the portion of the second metal base body in contact with the first metal base body has a projecting metal securing element fixed thereto at the attachment point and inserted through said securing hole of the first metal base body. The mentioned plastic reinforcement body comprises at least one overmolded fixing portion at the attachment point on a surface of the first metal base body opposite the second metal base body and embedding said securing hole and said projecting metal securing element.

The projecting metal securing element is preferably a stem provided with surface reliefs, which are embedded in said fixing portion of the plastic reinforcement body. In a preferred embodiment, said surface reliefs of the projecting metal securing element are in the form of an outer thread formed in said stem, such that the projecting metal securing elements can be screws, bolts or pieces of threaded rod commercially available at a relatively low cost, which can be fixed to the second metal base body by welding or by screwing in threaded holes formed therein. Nevertheless, in some applications, for example when the plastic reinforcement body surrounds the first and second metal base bodies at the attachment point or close to it, the projecting metal securing elements can be externally smooth.

The hybrid metal-plastic component of the present invention can comprise a metal structure made up of more than two metal base bodies attached to one another by the plastic reinforcement body in the manner described above, every two of the metal base bodies can be attached in one or more attachment regions, and in each attachment region there can be one or more of the mentioned attachment points. Throughout this description, the term "first metal base body" has been used to designate the metal base body having the securing hole at the attachment point and "second metal base body" has been used to designate the metal base body having the projecting metal securing element at the attachment point, however it will be understood that a metal base body can have a hole at an attachment point and a projecting metal securing element at another different attachment point, and vice versa.

During the manufacturing process, the metal base bodies must first be arranged with one another in the relative positions which they will occupy in the finished component and then placed together, conserving said relative positions, inside a mold for plastic injection molding provided with corresponding cavities configured to house the metal structure made up of the metal base bodies, and other cavities configured to mold the plastic reinforcement body. The fact of having projecting metal securing elements inserted in corresponding holes at the attachment points is an advantage when arranging the metal base bodies in the required relative positions and moving them conserving said relative positions in comparison with the components of the state of the art provided with facing holes at the attachment points.

In the component of the present invention, the securing holes of the first metal base body and the stems forming the projecting metal securing elements of the second metal base body are preferably sized to provide a clearance therebetween sufficient to allow a relative movement between the first and second metal base bodies when they are mutually coupled and before being attached by the overmolded plastic reinforcement body. When there are several attachment points in an attachment region of two metal base bodies, the mentioned clearance allows small relative translation movements. When there is a single attachment point in an attachment region of two metal base bodies, the clearance furthermore allows a relative rotation. Thus, when the assembly of metal base bodies arranged in the predetermined relative positions is placed inside the mold, the small relative movements provided by the clearances allow the assembly of the metal base bodies to be easily accommodated in the mold, absorbing the manufacturing tolerances and the handling inaccuracies.

The metal base bodies can be obtained from deep-drawn sheet metal, from a piece of closed cross-section profile metal tube, either straight or with curvatures and optionally with flattened regions, or from any other metal element shaped by any technique, such as bent sheet metal profile or an extruded metal profile. It must be taken into account that some of these materials, such as for example the metal tube, the bent sheet metal profile or the extruded metal profile, can be produced or commercially acquired at a significantly low cost in comparison with the elements made of deep-drawn sheet metal.

Optionally, when the first metal base body is of deep-drawn sheet metal, the securing hole is formed in a convex bulge, such that between said convex bulge and the second base body, around the corresponding projecting metal securing element, there is provided a space which is filled by the material of said fixing portion of the plastic reinforcement body during the overmolding operation. In an embodiment, the securing hole formed in the convex bulge of the first metal base body of sheet metal has formed in its perimetric edge lobes which define radial arms extending outwardly and towards the stem forming the corresponding projecting metal securing element. These radial arms are configured such that, when the first and second metal base bodies are mutually coupled before the overmolding operation, they have distal ends close to said stem providing the mentioned clearance. During the overmolding operation, the pressure of the molten plastic forces the radial arms inwardly and against the stem such that the distal ends of the radial arms are locked against the stem, establishing a metal-metal attachment in addition to the metal-plastic attachment. The locking of the radial arms in the stem is more secure if the projecting metal securing element has the mentioned surface reliefs, and still better if the surface reliefs are, for example, the mentioned outer thread.

When the first metal base body is made from a closed cross-section profile tube, the attachment point will preferably be located in a flattened region of said tube, and there will be two mutually aligned securing holes formed in opposite walls of the tube in said flattened region. The corresponding projecting metal securing element fixed to the second metal base body will be inserted through both securing holes. Nevertheless, in some cases, the attachment point could be located in a non-flattened region of the tube, where the two mutually aligned securing holes would be formed in opposite walls of the tube in said non-flattened region and the projecting metal securing element fixed to the second metal base body would be inserted through both securing holes. Given that the molten plastic material would be introduced into the tube through the securing holes, it would be necessary to obturate said non-flattened region of the tube to maximally limit the amount of plastic material used. When it is the second metal base body which is made from a closed cross-section profile tube, the attachment point can be arranged either in a flattened region or in a non-flattened region of the tube and the corresponding projecting metal securing element will be fixed to an outer surface of the tube in said flattened or non-flattened region.

It will be understood that the metal structure of the hybrid metal-plastic component of the present invention can be formed by any combination of two or more metal base bodies made from deep-drawn sheet metal, from closed cross-section profile tube optionally with flattened regions, or from other metal elements. Whichever the combination selected, the plastic reinforcement body can define one or more reinforcement ribs in contact at least with a surface of the first metal base body and optionally in contact furthermore with a surface of the second metal base body. Given the versatility provided by the overmolding technique, the plastic reinforcement body can furthermore define one or more functional elements, such as anchoring configurations for fixing the hybrid component to the body of a vehicle or to another structure, support elements for different components, etc. Thus, from the hybrid metal-plastic component of the present invention, a frontal element for an automotive vehicle, a structure for a vehicle door, a lateral reinforcement element, and other components which a person skilled in the art can easily think of can be produced, for example.

### Brief Description of the Drawings

The previous and other features and advantages will be more fully understood from the following detailed description of exemplary embodiments with reference to the attached drawings, in which:
Figure 1 is a partial perspective view of first and second metal base bodies before being coupled according to a first embodiment of the hybrid metal-plastic component of the present invention;
Figure 2 is a partial perspective view of the first and second metal base bodies of Figure 1 mutually coupled;
Figure 3 is a partial perspective view of the first and second metal base bodies of Figure 1 mutually coupled and attached by a plastic reinforcement body to form the hybrid metal-plastic component;
Figure 4 is a cross-sectional view taken through plane IV-IV of Figure 3;
Figure 5 is a partial perspective view of first and second metal base bodies before being coupled according to a second embodiment of the hybrid metal-plastic component of the present invention;
Figure 6 is a partial perspective view of the first and second metal base bodies of Figure 5 mutually coupled;
Figure 7 is a partially sectioned partial perspective view of the first and second metal base bodies of Figure 5 mutually coupled and attached by a plastic reinforcement body to form the hybrid metal-plastic component;
Figure 8 is a partial perspective view of first and second metal base bodies before being coupled according to a third embodiment of the hybrid metal-plastic component of the present invention;
Figures 9 and 10 are front and rear partial perspective views of the first and second metal base bodies of Figure 8 mutually coupled and attached by a plastic reinforcement body to form the hybrid metal-plastic component;
Figure 11 is a cross-sectional view taken through plane XI-XI of Figure 9;
Figure 12 is a partial perspective view of first and second metal base bodies before being coupled according to a fourth embodiment of the hybrid metal-plastic component of the present invention;
Figure 13 is a partial perspective view of the first and second metal base bodies of Figure 12 mutually coupled and attached by a plastic reinforcement body to form the hybrid metal-plastic component;
Figure 14 is a cross-sectional view taken through plane XTV-XIV of Figure 13;
Figure 15 is a partial perspective view of first and second metal base bodies before being coupled according to a fifth embodiment of the hybrid metal-plastic component of the present invention; and
Figure 16 is a partial perspective view of first and second metal base bodies before being coupled according to a sixth embodiment of the hybrid metal-plastic component of the present invention.

### Detailed Description of Exemplary Embodiments

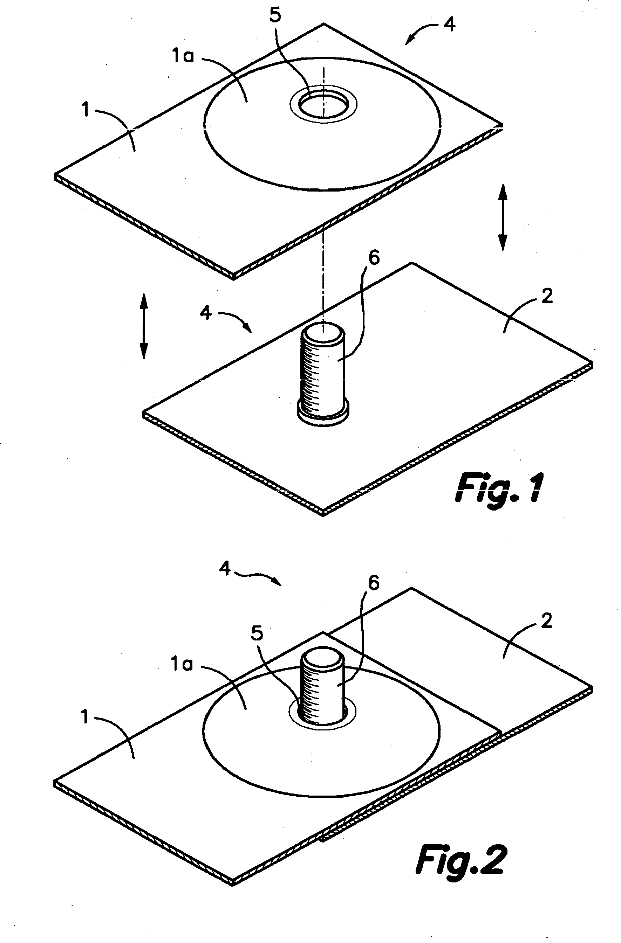

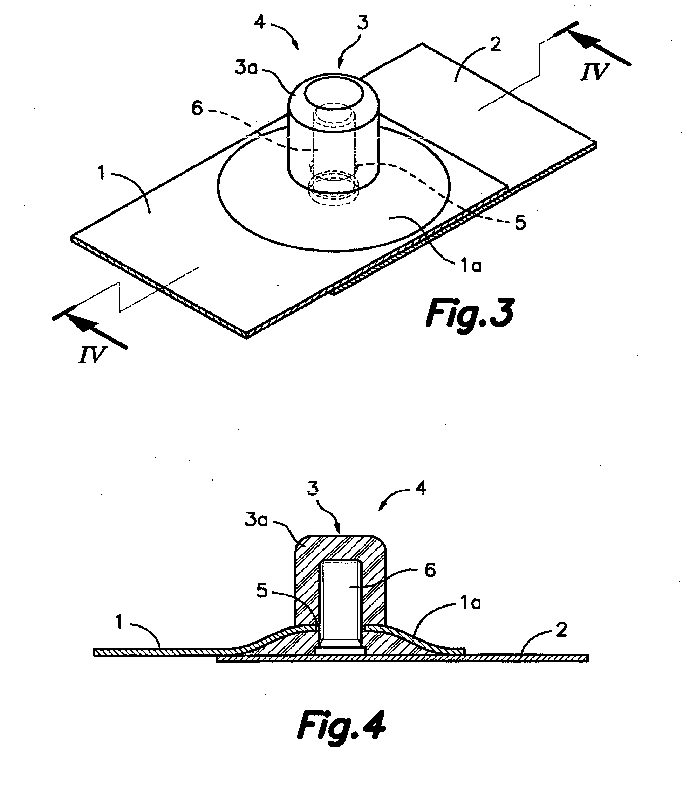

Referring first to Figures 1 to 4, a first embodiment of an attachment point 4 belonging to the hybrid metal-plastic component of the present invention is described below, which comprises a first metal base body 1 and a second metal base body 2 attached at said attachment point 4 by an overmolded plastic reinforcement body 3 in cooperation with respective mutually aligned attachment configurations (Figures 3 and 4). In this first embodiment, the mentioned first and second metal base bodies 1, 2 are formed from sheet metal, for example bent or deep-drawn sheet metal, and the attachment point 4 is located in respective planar portions of both of them. At the attachment point 4, the attachment configuration of the first metal base body 1 is in the form of a securing hole 5, whereas the attachment configuration of the second metal base body 2 comprises a projecting metal securing element 6 fixed thereto. The sheet forming the first metal base body 1 has a convex bulge 1a formed around the securing hole 5, and the projecting metal securing element 6 is a stem provided with surface reliefs, such as, for example, an outer thread formed in said stem. The stem forming the projecting metal securing element 6 is fixed perpendicularly to a surface of the second metal base body 2, for example, by welding.

In Figure 1, the first and second metal base bodies 1, 2 are separated and arranged with the respective securing hole 5 and projecting metal securing element 6 mutually aligned, before being mutually coupled and attached by means of a plastic material overmolding operation.

In Figure 2, the first and second metal base bodies 1, 2 are mutually coupled, with respective portions where the attachment point 4 is located in mutual contact, and with the stem forming the projecting metal securing element 6 of the second metal base body 2 inserted through the securing hole 5 of the first metal base body 1. The first and second metal base bodies 1, 2 mutually coupled in the manner shown in Figure 2 can be placed inside a plastic injection mold suitably configured to receive the first and second metal base bodies 1, 2 and to carry out a plastic material overmolding operation thereon.

In Figures 3 and 4, the first and second metal base bodies 1, 2 are mutually coupled and attached by a fixing portion 3a of the plastic reinforcement body 3 after the mentioned overmolding operation, together forming the hybrid metal-plastic component of the present invention. The mentioned fixing portion 3a of the plastic reinforcement body 3 is overmolded at the attachment point 4 on a surface of the first metal base body 1 opposite the second metal base body 2, such that the securing hole 5 of the first metal base body 1 and the projecting metal securing element 6 of the second metal base body 2 are embedded in the fixing portion 3a of the plastic reinforcement body 3. Furthermore, said convex bulge 1a of the first metal base body 1 provides a space between the convex bulge 1a and the second base body 2 around the projecting metal securing element 6, and said space is filled with the material of said fixing portion 3a of the plastic reinforcement body 3 introduced through a clearance existing between the securing hole 5 and the projecting metal securing element 6 during the overmolding operation. It will be observed that the surface reliefs provided by the outer thread of the stem forming the projecting metal securing element 6 are likewise embedded in the material of the fixing portion 3a of the plastic reinforcement body 3 preventing any possibility of axial movement of the plastic reinforcement body 3 or separation of the first and second metal base bodies 1, 2. If the first and second metal base bodies 1, 2 were made of planar sheets, the provision of several of such attachment points 4 would allow preventing relative rotations between the first and second metal base bodies 1, 2 and thus achieving an extraordinarily robust hybrid metal-plastic component. Alternatively, the relative rotations between the first and second metal base bodies 1, 2 in the hybrid metal-plastic component can be prevented by shape fits between the first and second metal base bodies 1, 2 although there is a single attachment point 4.

The hybrid metal-plastic component preferably includes several attachment points 4 including corresponding securing holes 5 in the first metal base body 1 and corresponding projecting metal securing elements 6 fixed to the second metal base body 2. When the first and second metal base bodies 1, 2 are mutually coupled before being attached by the overmolded plastic reinforcement body 3, as shown in Figure 2, the projecting metal securing elements 6 of the second metal base body 2 inserted in the securing holes 5 of the first metal base body 1 ensure correct relative position between both first and second metal base bodies 1, 2 and facilitate the handling of the assembly when it is introduced in the mold conserving said relative position, and at the same time the mentioned clearance existing between the securing holes 5 and the respective projecting metal securing elements 6 allows a small relative movement between the first and second metal base bodies 1, 2 sufficient to absorb manufacturing tolerances and handling inaccuracies and allow the assembly of the mutually coupled metal base bodies to be easily accommodated in the mold.

It must be indicated that, in a simpler embodiment (not shown), the securing hole 5 can be formed in the sheet of the first metal base body 1 without the convex bulge 1a being around it.

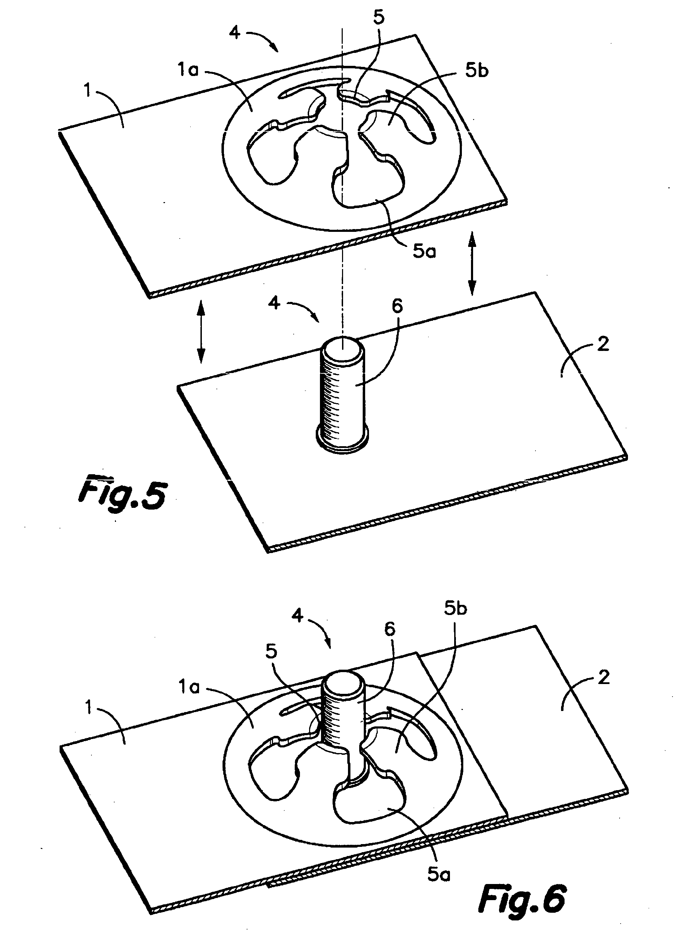

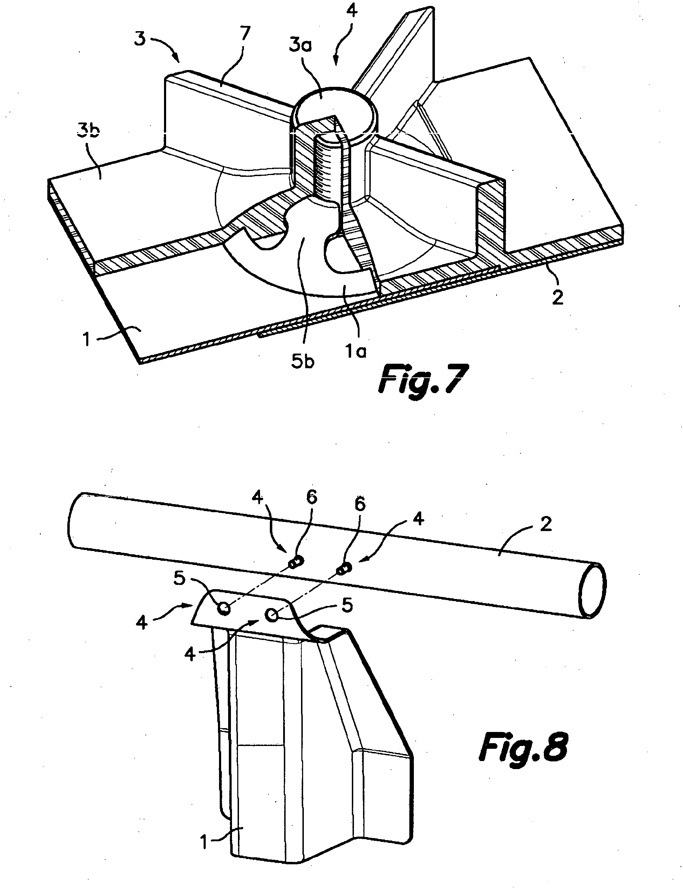

In relation now to Figures 5 to 7, a second embodiment of the attachment point 4 between the first and second metal base bodies 1, 2 of the hybrid metal-plastic component of the present invention is described. Similarly to the first embodiment, in this second embodiment the attachment point 4 is located in planar portions of sheets forming the first and second metal base bodies 1, 2. The first metal base body 1 comprises a securing hole 5 and a convex bulge 1a formed around said securing hole 5, whereas the second metal base body 2 has a projecting metal securing element 6 fixed thereto (Figures 5 and 6). The projecting metal securing element 6 is formed by an externally threaded stem. In the hybrid metal-plastic component (Figure 7), the first and second metal base bodies 1, 2 are mutually coupled, with the respective portions where the attachment point 4 is located in contact, with the stem forming the projecting metal securing element 6 of the second metal base body 2 inserted through the securing hole 5 of the first metal base body 1, and with a fixing portion 3a of the plastic reinforcement body 3 overmolded at the attachment point 4 on a surface of the first metal base body 1 opposite the second metal base body 2, embedding the securing hole 5 and the projecting metal securing element 6.

The main difference of this second embodiment with respect to the first one lies in the fact that here the perimetric edge of the securing hole 5 of the first metal base body 1 has formed therein lobes 5a (better shown in Figure 5), which define radial arms 5b extending outwardly, i.e., towards a side opposite the second metal base body 2, and towards the stem forming the projecting metal securing element 6 when both the first and second metal base bodies 1, 2 are mutually coupled, as shown in Figure 6. The radial arms 5b are sized such that, when the first and second metal base bodies 1, 2 are mutually coupled and before being attached by the plastic reinforcement body 3 (Figure 6), there is a clearance between the portions of the securing hole 5 defined at the distal ends of the radial arms 5b and the projecting metal securing element 6, the purpose of which is the same as that explained above in relation to the first embodiment. Nevertheless, when the first and second metal base bodies 1, 2 are mutually coupled and attached by the fixing portion 3a of the plastic reinforcement body 3 (Figure 7), the distal ends of the radial arms 5b are in contact and locked with the projecting metal securing element 6, providing a positive metal-metal securing in addition to the metal-plastic securing.

This is so because, during the overmolding operation, the pressure of the molten plastic material flowing into the space between the convex bulge 1a and the second base body 2 around the projecting metal securing element 6 inside the mold is capable of deforming the radial arms inwardly, i.e., towards the second metal base body 2, and against the projecting metal securing element 6. Thus, the mentioned space is filled with the plastic material of the plastic reinforcement body 3, the radial arms are locked in the projecting metal securing element 6, and the securing hole 5 and the projecting metal securing element 6 including the surface reliefs are embedded in the plastic material.

Another difference of the second embodiment with respect to the first one lies in the fact that the plastic reinforcement body 3 furthermore forms a layer 3b coating a surface of the first metal base body 1 and part of a surface of the second metal base body 2. The plastic reinforcement body 3 furthermore forms reinforcement ribs 7 connecting the fixing portion 3a with the layer 3b in contact with the surfaces of the first and second metal base bodies 1, 2.

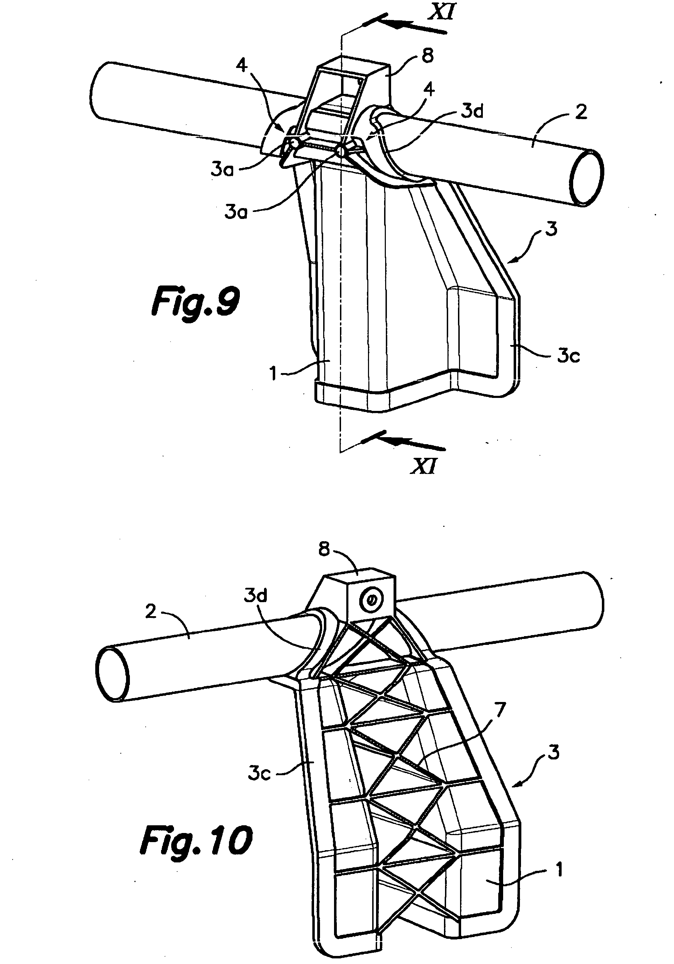

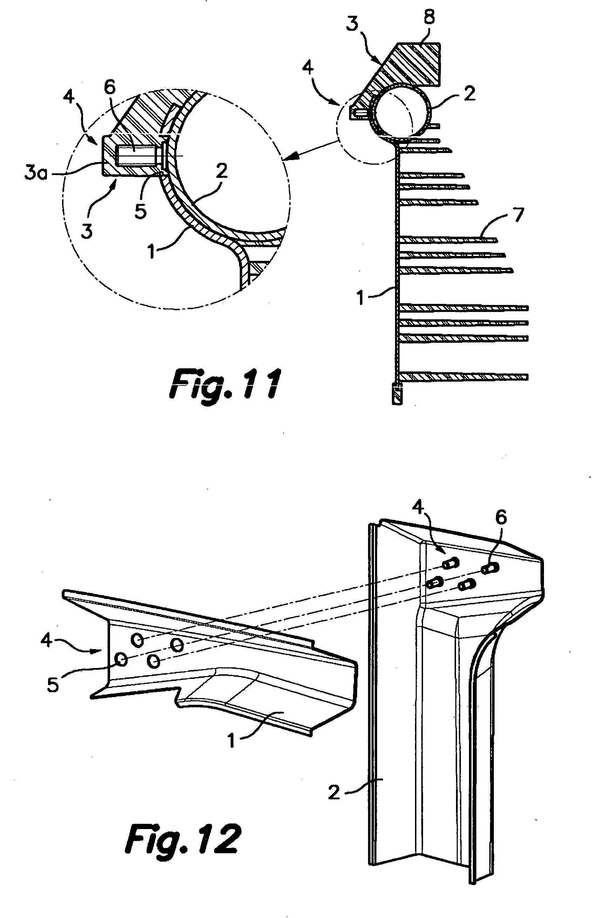

With reference now to Figures 8 to 11, they show a third embodiment of the hybrid metal-plastic component of the present invention, where the first metal base body 1 is made of deep-drawn sheet metal and the second metal base body 2 is made from a piece of closed cross-section profile tube, and more particularly, of circular cross-section profile tube, as shown in Figure 8. The first and second metal base bodies 1, 2 are in mutual contact in an attachment region in which there are two attachment points 4. Each of said attachment points 4 comprises a securing hole 5 formed in the sheet metal of the first metal base body 1 and a projecting metal securing element 6 fixed, by welding for example, to an outer surface of the tube forming the second metal base body 2, the projecting metal securing element 6 being inserted through the securing hole 5. On the mutually coupled first and second metal base bodies 1, 2 there is overmolded a plastic reinforcement body 3 (Figures 9, 10 and 11) having a pair of fixing portions 3a coating the attachment points, embedding the securing holes 5 and the projecting metal securing elements 6, as is better shown in the enlarged detail of Figure 11.

The first metal base body 1 of deep-drawn sheet metal generally defines a channel shape flanked by outwardly extended flanges and in the attachment region defines a cradle shape adapted to be coupled with the cylindrical tube forming the second metal base body 2. The plastic reinforcement body 3 defines a rim 3c following and covering a peripheral edge of the sheet metal of the first metal base body 1 and annular configurations 3d completely surrounding the tube forming the second metal base body 2. Furthermore, the plastic reinforcement body 3 defines a plurality of reinforcement ribs 7 connecting said rim 3c with a surface of the first metal base body 1 and in some places they also connect with said annular configurations 3d and with a surface of the second metal base body 2. In the mentioned channel shape of the first metal base body 1 the reinforcement ribs 7 are intercrossed forming a lattice structure. The plastic reinforcement body 3 of plastic material furthermore defines a functional element 10 useful for fixing the hybrid metal-plastic component to the body of a vehicle or another structure.

In this third embodiment, the projecting metal securing elements 6 are formed by stems provided with surface reliefs, and more specifically by externally threaded stems. However, here the projecting metal securing elements 6 could be smooth since the annular configurations 3d of the plastic reinforcement body 3 completely surround the tube forming the second metal base body 2 and prevent the separation of the plastic reinforcement body 3 from the first and second metal base bodies 1, 2.

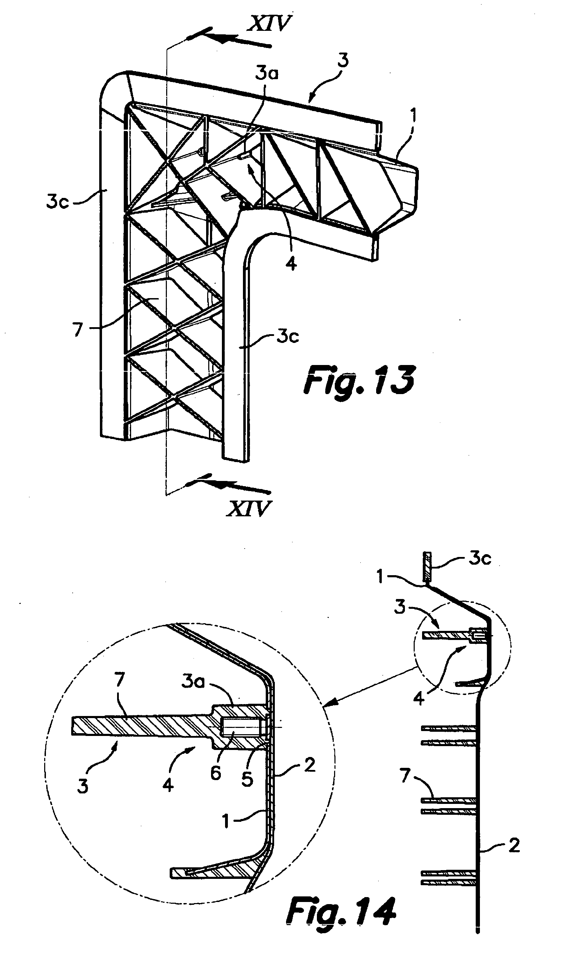

In relation to Figures 12 to 14, a fourth embodiment is described below in which the first and second metal base bodies 1, 2 are both made from deep-drawn sheet metal and are generally configured in a channel shape. The second metal base body 2 has at one end a configuration adapted to receive the first metal base body 1 such that the respective channel shapes form an angle. The attachment region is located in the corner of said angle and there the sheets of the first and second metal base bodies 1, 2 are in mutual contact. In the attachment region there are four attachment points, each of which includes a securing hole 5 formed in the sheet metal of the first metal base body 1 and a projecting metal securing element 6 fixed, by welding for example, to a surface of the sheet metal of the second metal base body 2, the projecting metal securing element 6 being inserted through the securing hole 5. On the mutually coupled first and second metal base bodies 1, 2 there is overmolded a plastic reinforcement body 3 (Figures 13 and 14) defining four fixing portions 3a coating the four attachment points, embedding the corresponding securing holes 5 and the projecting metal securing elements 6, as is better shown in the enlarged detail of Figure 14.

The channel shapes of the first and second metal base bodies 1, 2 are generally flanked by outwardly extended flanges, and the plastic reinforcement body 3 defines rims 3c following and covering said flanges (Figures 13 and 14). Furthermore, the plastic reinforcement body 3 defines a plurality of reinforcement ribs 7 connecting said rims 3c with surfaces of the first and second metal base bodies 1, 2. In the mentioned channel shapes of the first and second metal base bodies 1, 2 the reinforcement ribs 7 are intercrossed forming a lattice structure, and the attachment points 4, and consequently the fixing portions 3a of the plastic reinforcement body 3, are located in places where some of said reinforcement ribs 7 cross one another.

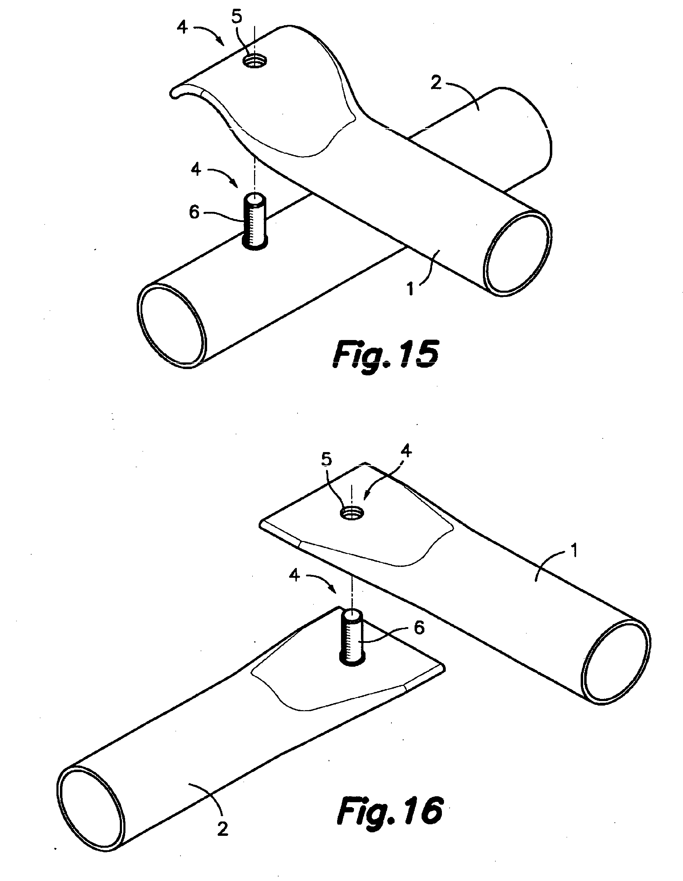

Figures 15 and 16 respectively show fifth and sixth embodiments which have in common that in them both the first metal base body 1 and the second metal base body 2 are made from pieces of closed cross-section profile tube, and more specifically, in the illustrated examples, circular cross-section profile tubes.

In the fifth embodiment shown in Figure 15, the tube forming the first metal base body 1 has at one end a flattened region configured in a cradle shape to be coupled with a non-flattened region of the tube forming the second metal base body 2. The attachment point 4 is located in the mentioned flattened region of the tube forming the first metal base body 1, where opposite walls of the tube are in mutual contact, and the attachment configuration comprises two mutually aligned securing holies 5 formed in said opposite walls of the tube in contact in the flattened region. The corresponding projecting metal securing element 6 is formed by a stem optionally provided with surface reliefs, such as an outer thread, fixed to an outer surface of the non-flattened region of the tube forming the second metal base body 2 at the attachment point 4. In order to make the hybrid metal-plastic component, the attachment regions of the first and second metal base bodies 1, 2 will be placed in mutual contact with the projecting metal securing element 6 inserted through both securing holes 5 and a plastic reinforcement body 3 (not shown) will be overmolded, embedding the securing hole 5 and the projecting metal securing element 6.

In the sixth embodiment shown in Figure 16, the tube forming the first metal base body 1 has at one end a planar flattened region where opposite walls of the tube are in mutual contact, and, similarly, the tube forming the second metal base body 2 has at one end a planar flattened region where opposite walls of the tube are in mutual contact. The attachment point 4 is located in both flattened regions of the tubes forming the first and second metal base bodies 1, 2. Here, the attachment configuration of the first metal base body 1 comprises two mutually aligned securing holes 5 formed in said opposite walls of the tube forming the first metal base body 1, which are in contact in the flattened region, and the attachment configuration of the second metal base body 2 comprises a projecting metal securing element 6, such as a stem optionally provided with surface reliefs, for example, an outer thread, fixed to an outer surface of the flattened region of the tube forming the second metal base body 2. In order to make the hybrid metal-plastic component, the attachment regions of the first and second metal base bodies 1, 2 will be placed in mutual contact with the projecting metal securing element 6 inserted through both securing holes 5 and a plastic reinforcement body 3 (not shown) will be overmolded, embedding the securing hole 5 and the projecting metal securing element 6.

A person skilled in the art will understand that the configurations of the first and second metal base bodies 1, 2 and the features of the attachment points 4 described in relation to the first, second, third, fourth, fifth and sixth embodiments can be combined with one another in many ways to form a hybrid metal-plastic component applicable to an automotive vehicle or to other fields. The hybrid metal-plastic component of the present invention is an extremely robust structural element offering a high freedom of design to provide complex shapes and to incorporate multiple functional elements. Furthermore, the complex and robust configurations can be obtained from metal elements produced or acquired at a low cost, such as metal tubes, extruded metal profiles, or profiles made of bent sheet metal, to make the first and second metal base bodies 1, 2, and threaded rods, bolts or screws to make the projecting metal securing elements 6.

Furthermore, a person skilled in the art will be able to carry out modifications and variations to the embodiments shown and described without departing from the scope of the present invention as it is defined in the attached claims.

## Claims

1. A hybrid metal-plastic component applicable to an automotive vehicle, of the type comprising first and second metal base bodies (1, 2) and an overmolded plastic reinforcement body (3), wherein said first and second metal base bodies (1, 2) have at an attachment point (4) respective aligned attachment configurations attached by said plastic reinforcement body (3), and wherein said attachment configuration of the first metal base body (1) comprises a securing hole (5) and the attachment configuration of the second metal base body (2) comprises a projecting metal securing element (6) inserted through said securing hole (5) of the first metal base body (1), said plastic reinforcement body (3) comprising at least one fixing portion (3a) overmolded at the attachment point (4) on a surface of the first metal base body (1) opposite the second metal base body (2) and embedding said securing hole (5) and said projecting metal securing element (6), **characterized in that**:
the first and second metal base bodies (1, 2) have respective portions in contact at said attachment point (4); and
said projecting metal securing element (6) is a stem with surface reliefs fixed to the second metal base body (2).

2. The hybrid component according to claim 1, **characterized in that** said stem forming the projecting metal securing element (6) is fixed to the second base body (2) by welding.

3. The hybrid component according to claim 1, **characterized in that** the plastic reinforcement body (3) defines at least one reinforcement rib (7) connecting said fixing portion (3a) with a surface of the first metal base body (1) and/or of the second metal base body (2).

4. The hybrid component according to claim 1 or 2, **characterized in that** said stem forming the projecting metal securing element (6) comprises surface reliefs embedded in said fixing portion (3a) of the plastic reinforcement body (3), said surface reliefs being in the form of an outer thread formed in said stem.

5. The hybrid component according to any of claims 1 to 4, **characterized in that** it comprises several of said attachment points (4), each including one of said projecting metal securing elements (6) fixed to one of the first and second metal base bodies (1, 2) and inserted through one of said securing holes (5) formed in the other one of the first and second metal base bodies (1, 2), there being a clearance between each securing hole (5) and its respective projecting metal securing element (6) sufficient to allow a relative movement between the first and second metal base bodies (1, 2) when they are mutually coupled and before being attached by the overmolded plastic reinforcement body (3).

6. The hybrid component according to any of claims 1 to 4, **characterized in that** the first metal base body (1) and/or the second base body (2) is made of deep-drawn sheet metal.

7. The hybrid component according to claim 6, **characterized in that** the securing hole (5) is formed in said convex bulge (1a) of the sheet metal of the first metal base body (1), a space between said convex bulge (1a) and the second base body (2) around the projecting metal securing element (6) is filled with the material of said fixing portion (3a) of the plastic reinforcement body (3).

8. The hybrid component according to claim 7, **characterized in that** the securing hole (5) of the first metal base body (1) has formed therein lobes (5a) which define radial arms (5b), a distal end of at least one of said radial arms (5b) being in contact with the projecting metal securing element (6).

9. The hybrid component according to any of claims 1 to 4, **characterized in that** the first metal base body (1) is made from a closed cross-section profile tube having a flattened region, an attachment point (4) is located in said flattened region of said tube, and two mutually aligned securing holes (5) are formed in opposite walls of the tube in contact in said flattened region, wherein the corresponding projecting metal securing element (6) is inserted through both securing holes (5).

10. The hybrid component according to any of claims 1 to 4, **characterized in that** the second metal base body (2) is made from a closed cross-section profile tube having a non-flattened region, at least one of the attachment points (4) is located in said non-flattened region of said tube and the corresponding projecting metal securing element (6) is fixed to an outer surface of the non-flattened region of the tube.

11. The hybrid component according to any of claims 1 to 4, **characterized in that** the second metal base body (2) is made from a closed cross-section profile tube having a flattened region, at least one of the attachment points (4) is located in said flattened region of said tube and the corresponding projecting metal securing element (6) is fixed to an outer surface of the flattened region of the tube.

12. The hybrid component according to any of claims 1 to 4, **characterized in that** the plastic reinforcement body (3) of plastic material furthermore defines at least one functional element (10).

13. A process for manufacturing a hybrid metal-plastic component applicable to an automotive vehicle, of the type comprising the steps of:
arranging first and second metal base bodies (1, 2) in a predetermined relative position in which respective attachment configurations are mutually aligned at an attachment point (4), wherein said attachment configuration of the first metal base body (1) comprises a securing hole (5) and the attachment configuration of the second metal base body (2) comprises a projecting metal securing element (6) inserted through said securing hole (5) of the first metal base body (1) when the first and second metal base bodies (1, 2) are in said predetermined relative position;
placing said first and second metal base bodies (1, 2) inside a mold, maintaining said predetermined relative position and closing said mold; and
overmolding at least one fixing portion (3a) of said plastic reinforcement body (3) at said attachment point (4) on a surface of the first metal base body (1) opposite the second metal base body (2), whereby said securing hole (5) and said projecting metal securing element (6) are embedded by said fixing portion (3a) of the plastic reinforcement body (3), **characterized in that** it furthermore comprises the steps of:
arranging the first and second metal base bodies (1, 2) with respective portions in contact at the attachment point (4) when in the predetermined relative position; and
providing said projecting metal securing element (6) in the form of a stem with surface reliefs fixed to the second metal base body (2).

14. The process according to claim 13, **characterized in that** it comprises sizing the projecting metal securing element (6) and the securing hole (5) such that there is a clearance between both of them sufficient to allow a relative movement between the first and second metal base bodies (1, 2) when they are mutually coupled and before being attached by the overmolded plastic reinforcement body (3).

15. The process according to claim 13, **characterized in that** it comprises forming the securing hole (5) of the first metal base body (1) with lobes (5a) which define radial arms (5b) extending outwardly and towards the projecting metal securing element (6) without making contact therewith when the first and second metal base bodies (1, 2) are mutually coupled and before being attached by said plastic reinforcement body (3), and deforming said radial arms (5b) towards the second metal base body (2) and against the projecting metal securing element (6) by the pressure of the molten plastic material flowing into the securing hole (5) inside the mold.

## Patentansprüche

1. Hybridbauteil aus Metall-Kunststoff, welches für ein Kraftfahrzeug anwendbar ist, der Art umfassend einen ersten und einen zweiten Grundkörper (1, 2) aus Metall und einen überspritzten Verstärkungskörper (3) aus Kunststoff, wobei der genannte erste und der genannte zweite Grundkörper (1, 2) aus Metall in einer Verbindungsstelle (4) jeweilige fluchtende Verbindungsausbildungen aufweisen, welche von dem genannten Verstärkungskörper (3) aus Kunststoff verbunden sind, und wobei die genannte Verbindungsausbildung des ersten Grundkörpers (1) aus Metall ein Befestigungsloch (5) umfasst und die Verbindungsausbildung des zweiten Grundkörpers (2) aus Metall ein vorstehendes Befestigungselement (6) aus Metall umfasst, welches durch das genannte Befestigungsloch (5) des ersten Grundkörpers (1) aus Metall eingeführt wird, wobei der genannte Verstärkungskörper (3) aus Kunststoff mindestens einen Fixierungsteil (3a) umfasst, welcher an der Verbindungsstelle (4) auf einer Oberfläche des ersten Grundkörpers (1) aus Metall, welche dem zweiten Grundkörper (2) aus Metall entgegengesetzt ist, überspritzt ist und das genannte Befestigungsloch (5) und das genannte vorstehende Befestigungselement (6) aus Metall einbettet, **dadurch gekennzeichnet, dass**:
der erste und der zweite Grundkörper (1, 2) aus Metall jeweilige Teile in Kontakt an der genannten Verbindungsstelle (4) aufweisen; und
das genannte vorstehende Befestigungselement (6) aus Metall ein Schaft mit Oberflächenreliefs ist, welcher an dem zweiten Grundkörper (2) aus Metall fixiert ist.

2. Hybridbauteil nach Anspruch 1, **dadurch gekennzeichnet, dass** der genannte Schaft, welcher das vorstehende Befestigungselement (6) aus Metall bildet, an dem zweiten Grundkörper (2) durch Schweißen fixiert wird.

3. Hybridbauteil nach Anspruch 1, **dadurch gekennzeichnet, dass** der Verstärkungskörper (3) aus Kunststoff mindestens eine Verstärkungsrippe (7) definiert, welche den genannten Fixierungsteil (3a) mit einer Oberfläche des ersten Grundkörpers (1) aus Metall und/oder des zweiten Grundkörpers (2) aus Metall verbindet.

4. Hybridbauteil nach Anspruch 1 oder 2, **dadurch gekennzeichnet, dass** der genannte Schaft, welcher das vorstehende Befestigungselement (6) aus Metall bildet, Oberflächenreliefs umfasst, welche in dem genannten Fixierungsteil (3a) des Verstärkungskörpers (3) aus Kunststoff eingebettet sind, wobei die genannten Oberflächenreliefs die Form eines äußeren, in dem genannten Schaft gebildeten Gewindes aufweisen.

5. Hybridbauteil nach einem der Ansprüche 1 bis 4, **dadurch gekennzeichnet, dass** es mehrere der genannten Verbindungsstellen (4) umfasst, wobei jede eines der genannten vorstehenden Befestigungselementen (6) aus Metall aufweist, das an einem des ersten und des zweiten Grundkörpers (1, 2) aus Metall fixiert und durch eines der genannten Befestigungslöcher (5) eingeführt ist, welche in dem Anderen des ersten und des zweiten Grundkörpers (1, 2) aus Metall gebildet sind, wobei es ein Spiel zwischen jedem Befestigungsloch (5) und seinem jeweiligen vorstehenden Befestigungselement (6) aus Metall gibt, das ausreicht, um eine relative Bewegung zwischen dem ersten und dem zweiten Grundkörper (1, 2) aus Metall zu ermöglichen, wenn diese miteinander gekoppelt sind und bevor diese von dem überspritzten Verstärkungskörper (3) aus Kunststoff verbunden werden.

6. Hybridbauteil nach einem der Ansprüche 1 bis 4, **dadurch gekennzeichnet, dass** der erste Grundkörper (1) aus Metall und/oder der zweite Grundkörper (2) aus tiefgezogenem Blech hergestellt ist.

7. Hybridbauteil nach Anspruch 6, **dadurch gekennzeichnet, dass** das Befestigungsloch (5) in der genannten konvexen Ausbauchung (1a) des Blechs des ersten Grundkörpers (1) aus Metall gebildet ist, ein Raum zwischen der genannten konvexen Ausbauchung (1a) und dem zweiten Grundkörper (2) um das vorstehende Befestigungselement (6) aus Metall mit dem Material von dem genannten Fixierungsteil (3a) des Verstärkungskörpers (3) aus Kunststoff gefüllt ist.

8. Hybridbauteil nach Anspruch 7, **dadurch gekennzeichnet, dass** das Befestigungsloch (5) des ersten Grundkörpers (1) aus Metall in seinem Inneren Flügel (5a) aufweist, welche radiale Arme (5b) definieren, wobei ein distales Ende von mindestens einem der genannten radialen Arme (6b) in Kontakt mit dem vorstehenden Befestigungselement (6) aus Metall ist.

9. Hybridbauteil nach einem der Ansprüche 1 bis 4, **dadurch gekennzeichnet, dass** der erste Grundkörper (1) aus Metall aus einem Rohr mit geschlossenem Querschnittsprofil hergestellt ist, welches einen abgeflachten Bereich aufweist, eine Verbindungsstelle (4) in dem genannten abgeflachten Bereich des genannten Rohrs angebracht ist, und zwei miteinander fluchtende Befestigungslöcher (5) in entgegengesetzten Wänden des Rohrs in Kontakt mit dem genannten abgeflachten Bereich gebildet sind, wobei das entsprechende vorstehende Befestigungselement (6) aus Metall durch beide Befestigungslöcher (5) eingeführt ist.

10. Hybridbauteil nach einem der Ansprüche 1 bis 4, **dadurch gekennzeichnet, dass** der zweite Grundkörper (2) aus Metall aus einem Rohr mit geschlossenem Querschnittsprofil hergestellt ist, welches einen nicht abgeflachten Bereich aufweist, mindestens eine der Verbindungsstellen (4) in dem genannten nicht abgeflachten Bereich des genannten Rohrs angebracht ist und das entsprechende vorstehende Befestigungselement (6) aus Metall an einer äußeren Oberfläche des nicht abgeflachten Bereichs des Rohrs fixiert ist.

11. Hybridbauteil nach einem der Ansprüche 1 bis 4, **dadurch gekennzeichnet, dass** der zweite Grundkörper (2) aus Metall aus einem Rohr mit geschlossenem Querschnittsprofil hergestellt ist, welches einen abgeflachten Bereich aufweist, mindestens eine der Verbindungsstellen (4) in dem genannten abgeflachten Bereich des genannten Rohrs angebracht ist und das entsprechende vorstehende Befestigungselement (6) aus Metall an einer äußeren Oberfläche des abgeflachten Bereichs des Rohrs fixiert ist.

12. Hybridbauteil nach einem der Ansprüche 1 bis 4, **dadurch gekennzeichnet, dass** der Verstärkungskörper (3) aus Kunststoff, aus Kunststoffmaterial, zusätzlich mindestens ein Funktionselement (10) definiert.

13. Verfahren für die Herstellung eines Hybridbauteils aus Metall-Kunststoff, welches für ein Kraftfahrzeug anwendbar ist, der Art umfassend folgende Schritte:
Anordnen des ersten und des zweiten Grundkörpers (1, 2) aus Metall in einer vorbestimmten relativen Stellung in welcher jeweilige Verbindungsausbildungen in einer Verbindungsstelle (4) miteinander fluchten, wobei die genannte Verbindungsausbildung des ersten Grundkörpers (1) aus Metall ein Befestigungsloch (5) umfasst und die Verbindungsausbildung des zweiten Grundkörpers (2) aus Metall ein vorstehendes Befestigungselement (6) aus Metall umfasst, welches durch das genannte Befestigungsloch (5) des ersten Grundkörpers (1) aus Metall eingeführt wird, wenn sich der erste und der zweite Grundkörper (1, 2) aus Metall in der genannten vorbestimmten relativen Stellung befinden;
Anbringen des genannten ersten und des genannten zweiten Grundkörpers (1, 2) aus Metall in eine Form, bei Aufrechterhaltung der genannten vorbestimmten relativen Stellung und Schließen der genannten Form; und
Überspritzen von mindestens einem Fixierungsteil (3a) des genannten Verstärkungskörpers (3) aus Kunststoff an der genannten Verbindungsstelle (4) auf einer Oberfläche des ersten Grundkörpers (1) aus Metall, welche dem zweiten Grundkörper (2) aus Metall entgegengesetzt ist, wodurch das genannte Befestigungsloch (5) und das genannte vorstehende Befestigungselement (6) aus Metall von dem genannten Fixierungsteil (3a) des Verstärkungskörpers (3) aus Kunststoff eingebettet sind, **dadurch gekennzeichnet, dass** es zusätzlich folgende Schritte umfasst:
Anordnen des ersten und des zweiten Grundkörpers (1, 2) aus Metall mit jeweiligen Teilen in Kontakt an der Verbindungsstelle (4), wenn sie in der vorbestimmten relativen Stellung sind; und
Vorsehen des genannten vorstehenden Befestigungselement (6) aus Metall in Form eines Schafts mit Oberflächenreliefs, welcher an dem zweiten Grundkörper (2) aus Metall fixiert ist.

14. Verfahren nach Anspruch 13, **dadurch gekennzeichnet, dass** es die Bemessung des vorstehenden Befestigungselements (6) aus Metall und des Befestigungslochs (5) umfasst, so dass es ein Spiel zwischen beiden gibt, das ausreicht, um eine relative Bewegung zwischen dem ersten und dem zweiten Grundkörper (1, 2) aus Metall zu ermöglichen, wenn diese miteinander gekoppelt sind und bevor diese von dem überspritzten Verstärkungskörper (3) aus Kunststoff verbunden werden.

15. Verfahren nach Anspruch 13, **dadurch gekennzeichnet, dass** es die Bildung des Befestigungslochs (5) des ersten Grundkörpers (1) aus Metall mit Flügeln (5a) umfasst, welche radiale Arme (5b) definieren, welche sich nach außen und zum vorstehenden Befestigungselement (6) aus Metall erstrecken, ohne mit demselben in Kontakt zu kommen, wenn der erste und der zweite Grundkörper (1) aus Metall miteinander gekoppelt sind und bevor diese von dem genannten Verstärkungskörper (3) aus Kunststoff verbunden werden, und Verformen der genannten radialen Arme (5b) zum zweiten Grundkörper (2) aus Metall und gegen dem vorstehenden Befestigungselement (6) aus Metall durch Druck auf das geschmolzene Kunststoffmaterial, welches in das Befestigungsloch (5) im Inneren der Form fließt.

## Revendications

1. Composant hybride métal-plastique applicable à un véhicule automobile, du type comprenant un premier et un deuxième corps de base métallique (1, 2) et un corps de renforcement en plastique (3) surmoulé, dans lequel ledit premier et ledit deuxième corps de base métallique (1, 2) ont sur un point de liaison (4) des configurations de liaison alignées respectives liées par ledit corps de renforcement en plastique (3), et dans lequel ladite configuration de liaison dudit premier corps de base métallique (1) comprend un orifice d'attache (5) et la configuration de liaison du deuxième corps de base métallique (2) comprend un élément d'attache métallique saillant (6) inséré à travers ledit orifice d'attache (5) du premier corps de base métallique (1), ledit corps de renforcement en plastique (3) comprenant au moins une portion de fixation (3a) surmoulée au niveau du point de liaison (4) sur une surface du premier corps de base métallique (1) opposé au deuxième corps de base métallique (2), et intégrant ledit orifice d'attache (5) et ledit élément d'attache métallique saillant (6), **caractérisé en ce que** :
le premier et le deuxième corps de base métallique (1, 2) ont des portions respectives en contact au niveau dudit point de liaison (4), et
ledit élément d'attache métallique saillant (6) est une tige avec des reliefs de surface fixée au deuxième corps de base métallique (2).

2. Composant hybride selon la revendication 1, **caractérisé en ce que** ladite tige constituant l'élément d'attache métallique saillant (6) est fixée au deuxième corps de base (2) par soudure.

3. Composant hybride selon la revendication 1, **caractérisé en ce que** le corps de renforcement en plastique (3) définit au moins une nervure de renforcement (7) reliant ladite portion de fixation (3a) à une surface dudit premier corps de base métallique (1) et/ou du deuxième corps de base métallique (2).

4. Composant hybride selon la revendication 1 ou 2, **caractérisé en ce que** ladite tige constituant l'élément d'attache métallique saillant (6) comprend des reliefs de surface intégrés dans ladite portion de fixation (3a) du corps de renforcement en plastique (3), lesdits reliefs de surface étant sous forme de filet extérieur formé dans ladite tige.

5. Composant hybride selon l'une quelconque des revendications 1 à 4, **caractérisé en ce qu'**il comprend plusieurs desdits points de liaison (4), chacun comportant un desdits éléments d'attache métalliques saillants (6) fixés à un du premier et deuxième corps de base métallique (1, 2) et insérés à travers un des orifices d'attache (5) formés dans l'autre du premier et deuxième corps de base métallique (1, 2), un jeu étant présent entre chaque orifice d'attache (5) et son élément d'attache métallique saillant (6) respectif, suffisant pour permettre un mouvement relatif entre le premier et le deuxième corps de base métallique (1, 2) lorsqu'ils sont accouplés mutuellement et avant d'être liés par le corps de renforcement en plastique (3) surmoulé.

6. Composant hybride selon l'une quelconque des revendications 1 à 4, **caractérisé en ce que** le premier corps de base métallique (1) et/ou le deuxième corps de base (2) est réalisé à partir de feuille métallique emboutie.

7. Composant hybride selon la revendication 6, **caractérisé en ce que** l'orifice d'attache (5) est formé dans ledit renflement convexe (1a) de la feuille métallique du premier corps de base métallique (1), un espace entre ledit renflement convexe (1a) et le deuxième corps de base (2) autour de l'élément d'attache métallique saillant (6) est rempli de la matière de ladite portion de fixation (3a) du corps de renforcement en plastique (3).

8. Composant hybride selon la revendication 7, **caractérisé en ce que** l'orifice d'attache (5) du premier corps de base métallique (1) possède formés en son sein des lobes (5a) qui définissent des bras radiaux (5b), une extrémité distale d'au moins un desdits bras radiaux (5b) étant en contact avec l'élément d'attache métallique saillant (6).

9. Composant hybride selon l'une quelconque des revendication 1 à 4, **caractérisé en ce que** le premier corps de base métallique (1) est réalisé à partir d'un tube profilé de section transversale fermée ayant une région aplatie, un point de liaison (4) est situé dans ladite région aplatie dudit tube, et deux orifices d'attache (5) alignés mutuellement sont formés dans des parois opposées du tube en contact dans ladite région aplatie, dans lequel l'élément d'attache métallique saillant (6) correspondant est inséré à travers les deux orifices de liaison (5).

10. Composant hybride selon l'une quelconque des revendications 1 à 4, **caractérisé en ce que** le deuxième corps de base métallique (2) est réalisé à partir d'un tube profilé à section transversale fermée ayant une région non aplatie, au moins un des points de liaison (4) est situé dans ladite région non aplatie dudit tube et l'élément d'attache métallique saillant (6) correspondant est fixé à une surface extérieure de la région no aplatie du tube.

11. Composant hybride selon l'une quelconque des revendications 1 à 4, **caractérisé en ce que** le deuxième corps de base métallique (2) est réalisé à partir d'un tube profilé à section transversale fermée ayant une région aplatie, au moins un des points de liaison (4) est situé dans ladite région aplatie dudit tube et l'élément d'attache métallique saillant (6) correspondant est fixé à une surface extérieure de la région aplatie du tube.

12. Composant hybride selon l'une quelconque des revendications 1 à 4, **caractérisé en ce que** le corps de renforcement en plastique (3) de matière plastique définit en outre au moins un élément fonctionnel (10).

13. Procédé pour fabriquer un composant hybride métal-plastique applicable à un véhicule automobile, du type comprenant les étapes de :
disposer un premier et un deuxième corps de base métallique (1, 2) dans une position relative prédéterminée dans laquelle des configurations de liaison respectives son alignées mutuellement au niveau d'un point de liaison (4), dans lequel ladite configuration de liaison dudit premier corps de base métallique (1) comprend un orifice d'attache (5) et la configuration de liaison du deuxième corps de base métallique (2) comprend un élément d'attache métallique saillant (6) inséré à travers ledit orifice d'attache (5) du premier corps de base métallique (1), lorsque le premier et le deuxième corps de base métallique (1, 2) sont dans ladite position relative prédéterminée ;
placer ledit premier et ledit deuxième corps de base métallique (1, 2) à l'intérieur d'un moule, en maintenant ladite position relative prédéterminée, et fermer ledit moule ; et
surmouler au moins une portion de fixation (3a) dudit corps de renforcement en plastique (3) au niveau dudit point de liaison (4) sur une surface du premier corps de base métallique (1) opposé au deuxième corps de base métallique (2),
moyennant quoi ledit orifice d'attache (5) et ledit élément d'attache métallique saillant (6) sont intégrés par ladite portion de fixation (3a) du corps de renforcement en plastique (3), **caractérisé en ce qu'**il comprend en outre les étape de :
disposer le premier et deuxième corps de base métallique (1, 2) avec des portions respectives en contact au niveau du point de liaison (4) lorsque qu'ils se trouvent dans une position relative prédéterminée ; et
fournir ledit élément d'attache métallique saillant (6) sous forme d'une tige avec des reliefs de surface fixée au deuxième corps de base métallique (2).

14. Procédé selon la revendication 13, **caractérisé en ce qu'**il comprend dimensionner l'élément d'attache métallique saillant (6) et l'orifice d'attache (5) de manière qu'il soit présent un jeu entre les deux suffisant pour permettre un mouvement relatif entre le premier et le deuxième corps de base métallique (1, 2) lorsqu'ils sont accouplés mutuellement et avant d'être liés par le corps de renforcement en plastique (3) surmoulé.

15. Procédé selon la revendication 13, **caractérisé en ce qu'**il comprend former l'orifice d'attache (5) du premier corps de base métallique (1) avec des lobes (5a) qui définissent des bras radiaux (5b) s'étendant vers l'extérieur et vers l'élément d'attache métallique saillant (6) sans entrer en contact avec celui-ci lorsque le premier et le deuxième corps de base métallique (1, 2) sont accouplés mutuellement et avant d'être liés par ledit corps de renforcement en plastique (3), et déformer lesdits bras radiaux (5b) vers le deuxième corps de base métallique (2) et contre l'élément d'attache métallique saillant (6) par la pression de la matière plastique fondue s'écoulant dans l'orifice d'attache (5) à l'intérieur du moule.
